# EUROPÄISCHE PATENTANMELDUNG

(11) **EP 1 452 680 A2**
(43) Veröffentlichungstag der Anmeldung: **01.09.2004**
(21) Anmeldenummer: 04002499.4
(22) Anmeldetag: 05.02.2004
(51) Int. Cl.: E05F 5/02, B62D 25/12

(54) **Kraftfahrzeug mit zumindest einem Bauteil**

(30) Priorität: 21.02.2003 DE 10307528
(71) Anmelder: Bayerische Motoren Werke Aktiengesellschaft, 80809 München (DE)
(72) Erfinder: Heydenreich, Bertram, 85579 Neubiberg (DE); Dirndorfer, Albin, Dr., 85375 Neufahrn (DE); Keller, Arno, 81543 München (DE)

(57) **Zusammenfassung**

Allgemein bekannt ist ein Anschlagpuffer, der ausschließlich als Gummibauteil ausgebildet ist. Solche Anschlagpuffer dienen beispielsweise dazu, eine Kofferraumklappe von Kraftfahrzeugen beim Schließen gegenüber der restlichen Karosserie so abzustützen, dass die Kofferraumklappe nicht auf der restlichen Karosserie aufschlagen kann. Aufgabe der Erfindung ist es, ein elastisches Bauteil für ein Kraftfahrzeug zu schaffen, dessen elastischen Eigenschaften sich an die einwirkenden Kräfte anpassen können.

Erfindungsgemäß besteht zumindest ein Bauteil (6, 16, 26, 36) eines Kraftfahrzeugs aus einer dreidimensionalen Matrix auf Basis von Polynorbonen, aus Nitril-PVC-Schaum oder aus geschäumten Polyolefinen. Das Bauteil hat sowohl elastische als auch energieabsorbierende Eigenschaften.

## Beschreibung

Die Erfindung betrifft ein Kraftfahrzeug mit zumindest einem Bauteil.

Aus der DE 1 855 641 U ist ein Anschlagpuffer bekannt, der ausschließlich als Gummibauteil ausgebildet ist, das relativ weich eingestellt ist und an einem Ende ein Außengewinde zum Eindrehen in ein Loch eines Blechbauteils besitzt. Solche Anschlagpuffer dienen beispielsweise dazu, eine Kofferraumklappe von Kraftfahrzeugen beim Schließen gegenüber der restlichen Karosserie so abzustützen, dass die Kofferraumklappe nicht auf der restlichen Karosserie aufschlagen kann. Allerdings darf die Kofferraumklappe nachteiligerweise zum Schließen weder zu langsam noch zu schnell zugeworfen werden. Wird die Kofferraumklappe zu langsam zugeworfen, verhindert der elastische Anschlagpuffer, dass die Kofferraumklappe ins Schloss fallen kann. Wird dagegen die Kofferraumklappe zu schnell zugeworfen, kann der Anschlagpuffer nicht die gesamte überschüssige Energie abfangen, sodass die Kofferraumklappe trotzdem auf die restliche Karosserie durchschlagen kann.

Aufgabe der Erfindung ist es, ein elastisches Bauteil für ein Kraftfahrzeug zu schaffen, dessen elastischen Eigenschaften sich an die einwirkenden Kräfte anpassen können.

Diese Aufgabe wird durch die Merkmale des Patentanspruchs 1 gelöst.

Erfindungsgemäß besteht zumindest ein Bauteil eines Kraftfahrzeugs aus einer dreidimensionalen Matrix auf Basis von Polynorbonen, aus Nitril-PVC-Schaum oder aus geschäumten Polyolefinen. Die Matrix auf Basis von Polynorbonen zeichnet sich durch eine hohe Energieaufnahmefähigkeit und durch eine entsprechende Elastizität aus. Polynorbone weisen durch ihre spezielle Molekularstruktur eine hohe Füllbarkeit mit verschiedensten Füllstoffen auf. Dadurch können, beispielsweise im Gegensatz zu Gummi oder Kautschuk, wesentlich bessere physikalische Eigenschaften gezielt erreicht werden. Als Füllstoffe kommen vorteilhafterweise spezielle Öle oder Silikate zum Einsatz. Dies sind sehr preiswerte Füllstoffe, mit denen die gewünschte Elastizität und Energieaufnahmefähigkeit des Werkstoffs gezielt eingestellt werden kann. Alternativ dazu kann das elastische Bauteil aus geschäumten Elastomeren, vorzugsweise aus Nitril-PVC-Schaum oder geschäumten Polyolefinen bestehen. Derartige Materialien zeigen gute stoßabsorbierende Eigenschaften bei günstigen Herstellungs- und Verarbeitungskosten. Bei einigen dieser Materialen ist eine Energieabsorption von bis zu 99 % möglich. Die elastischen Bauteile aus diesen Materialen können in nahezu jede beliebige Form gebracht werden. Aufgrund der hohen möglichen Energieaufnahme verringert sich der benötigte Bauraumbedarf gegenüber herkömmlichen Bauteilen mit energieabsorbierenden Eigenschaften.

Derartige Materialen sind beispielsweise unter den Markennamen "Astrosorb", "Astroshock" oder "Memory" von der Firma Astron Elastomerprodukte GmbH bekannt. "Astrosorb" und "Astroshock" weisen eine Matrix auf Basis von Polynorbonen auf, "Memory" dagegen hat eine Basis von Nitril-PVC-Schaum.

Eine Materialprobe aus einer Matrix auf Basis von Polynorbonen, die mit Silikaten gefüllt ist, und die die Form einer Kugel aufweist, verdeutlicht die im Fahrzeugbau außerordentlich vorteilhaften Eigenschaften des Werkstoffs. Wenn diese Kugel aus einer Höhe von einem halben Meter, einem Meter oder mehr als einem Meter fallengelassen wird, bleibt die Kugel jedes Mal direkt am Boden liegen, ohne am Boden abzuprallen. Die Probe nimmt also die unterschiedliche kinetische Energie der Kugel jeweils vollständig auf. Innerhalb sehr kurzer Zeit nach dem Aufprall am Boden nimmt die Materialprobe dabei wieder ihre ursprüngliche Kugelform an.

Aufgrund dieser Eigenschaften ergeben sich ideale Anwendungen in bzw. an einem Kraftfahrzeug. So kann beispielsweise das elastische Bauteil eine an einer Fahrzeugklappe angebrachte Dichtung oder zumindest ein Teil der Dichtung bilden. Ergänzend oder alternativ können an der Fahrzeugklappe auch elastische Bauteile vorgesehen sein, die als Anschlagpuffer oder zumindest als Teil eines Anschlagpuffers fungieren. Unabhängig von der Wucht, mit der die Fahrzeugklappe zugeschlagen wird, wird diese beim Schließen durch die Dichtung und / oder die Anschlagpuffer dann so abgebremst, dass sie ohne auf die restliche Karosserie durchzuschlagen leicht ins Schloss fällt.

Auch im Fahrzeuginneren ergeben sich sehr geeignete Anwendungen eines solchen Bauteils mit energieabsorbierenden Eigenschaften. Insbesondere alle Bauteile, die bei einem Unfall einen Aufprall eines Passagiers passiv abfangen sollen, bieten sich an, wie zum Beispiel Knieaufprallpolster an einer Armaturentafel oder Verkleidungen von Türen.

Weitere vorteilhafte Ausgestaltungen und Anwendungen sind Gegenstand von Unteransprüchen.

In der Zeichnung sind vier Ausführungsbeispiele der Erfindung dargestellt, anhand derer die Erfindung im Folgenden näher beschrieben wird. Die Figuren zeigen in schematischer Darstellungsweise:
- **Fig.** 1: einen Schnitt durch eine Dichtung einer Frontklappe,
- **Fig.** 2: einen Schnitt durch einen Anschlagpuffer einer Frontklappe,
- **Fig.** 3: eine perspektivische Ansicht einer Frontklappe und
- **Fig.** 4: eine perspektivische Ansicht einer Stoßfängerverkleidung.

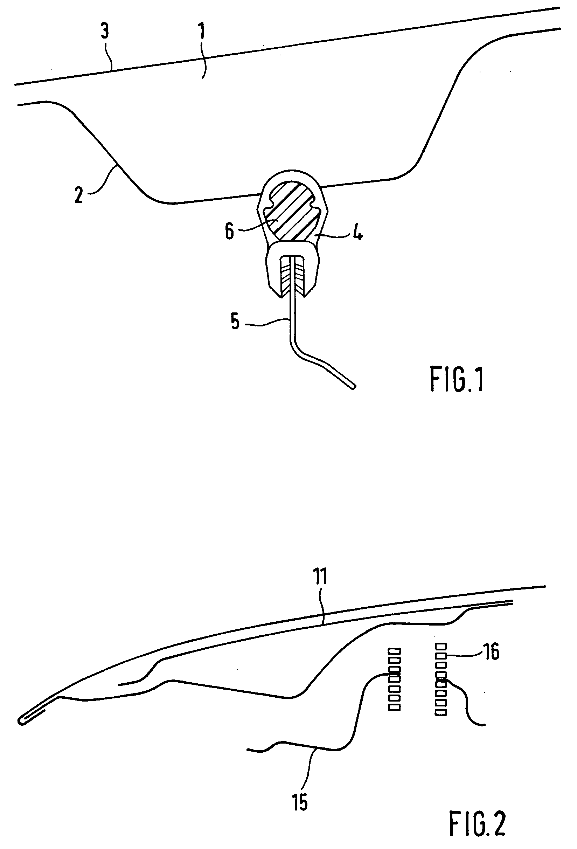

**Fig.** 1 zeigt eine Frontklappe 1 in Schalenbauweise mit einer Innen- und einer Außenschale 2 und 3. An der Innenschale 1 liegt eine Hohlkammerdichtung 4 an, die auf einem Flansch 5 einer Fahrzeugkarosserie aufgesteckt ist. Die Hohlkammerdichtung 4 besteht aus EPDM mit einem integrierten Carrier zum Klemmen auf dem Flansch 5, wobei die Hohlkammer mit einem elastischen Bauteil 6 gefüllt ist. Das elastische Bauteil 6 besteht aus einer Matrix auf Basis von Polynorbonen mit Silikaten als Füllstoff. Durch die Menge und Art der Füllstoffe lassen sich die Eigenschaften des elastischen Bauteils 6 auf die jeweilige Anwendung gut abstimmen.

Das elastische Bauteil 6 in der Hohlkammerdichtung 4 kann in hohem Maße Energie absorbieren. Wenn nun die Frontklappe 1 geschlossen wird, absorbiert die Hohlkammerdichtung 4 mit dem elastischen Bauteil 6 die überschüssige kinetische Energie, sodass die Frontklappe 1 stark gedämpft noch leicht ins Schloss fallen kann, aber nicht zur restlichen Karosserie durchschlagen kann. Dadurch erhöht sich auch der akustische Schließkomfort der Frontklappe 1. Aufgrund der hohen Energieabsorptionsfähigkeit des elastischen Bauteils 6 kann das Fugenmaß zwischen Frontklappe 1 und der restlichen Karosserie zudem verkleinert werden, ohne dass zusätzliche Maßnahmen erforderlich sind, um die Produktionstoleranzen zu reduzieren. Hätte das elastische Bauteil 6 dagegen im wesentlichen nur elastische Eigenschaften wie Gummi oder Kautschuk, so würde die Frontklappe 1 an der Hohlkammerdichtung 4 zurückfedern, bevor die Frontklappe ins Schloss fallen kann, wenn die Frontklappe 1 nur langsam geschlossen wird. Erst die hohen energieabsorbierenden Eigenschaften des elastischen Bauteils 6 ermöglichen, dass die Frontklappe 1 weitestgehend unabhängig von ihrer kinetischen Energie durch die Hohlkammerdichtung 4 mit dem elastischen Bauteil 6 abgebremst immer mit dem richtigen Schwung ins Schloss fällt.

In **Fig.** 2 ist ein Anschlagpuffer 16 als elastisches Bauteil für eine Frontklappe 11 dargestellt, der in eine Ausnehmung in einem karosserieseitigen Blech 15 mit einem Außengewinde eingeschraubt ist. Der Anschlagpuffer 16 besteht aus Nitril-PVC-Schaum, der hohe Energieabsorptionseigenschaften aufweist. Ebenso wie die Dichtung aus **Fig.** 1 verhindert der Anschlagpuffer 16 das Durchschlagen der Frontklappe 11 beim Schließen und erhöht den akustischen Schließkomfort. Analog zu der Dichtung können die Fugenmaße reduziert werden, ohne dass zusätzliche Maßnahmen erforderlich sind, um die Produktionstoleranzen zu reduzieren.

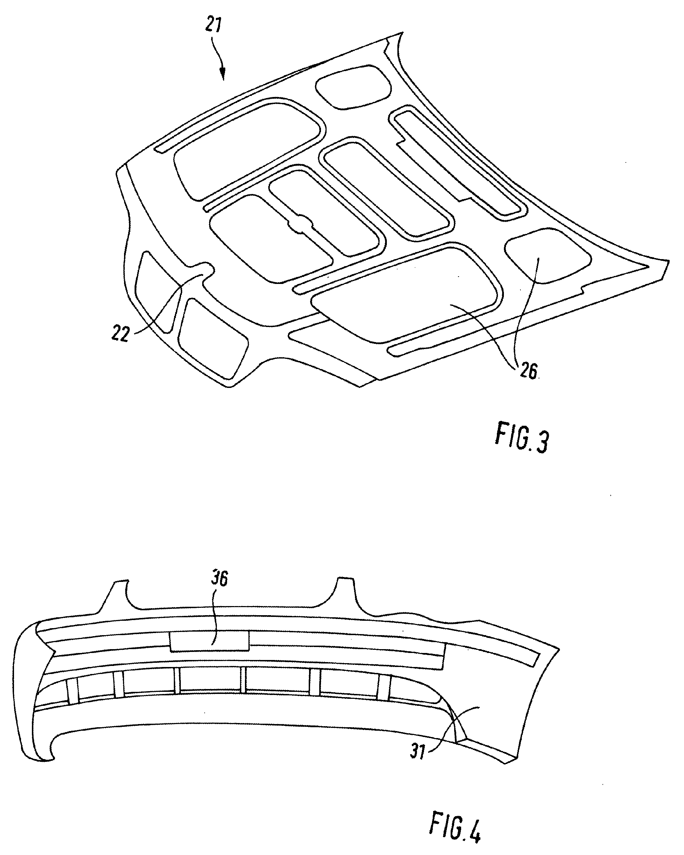

**Fig.** 3 zeigt eine Frontklappe 21, die aus einem hier nicht gezeigten Außenblech besteht, das mit einem Verstärkungsrahmen 22 von unten versteift ist. Die so gebildete Frontklappe 21 ist von unten mit energieabsorbierenden Bauteilen 26 aus geschäumten Polyolefinen verkleidet. Diese Bauteile 26 erfüllen die Funktion konventioneller Verkleidungen zur Schallisolierung. Darüber hinaus können sie aufgrund ihrer energieabsorbierenden Eigenschaften einen Aufprall eines Fußgängers oder Radfahrers weich auffangen. Dadurch verringert sich das Verletzungsrisiko des aufprallenden Fußgängers oder Radfahrers. Im Gegensatz zu bekannten Mechanismen zum Fußgängeraufprallschutz, bei denen die Frontklappe bei einem detektierten Aufprall eines Fußgängers zumindest im hinteren Bereich angehoben wird, bietet die Frontklappe 21 durch die elastischen Bauteile 26 auch einen Schutz bei einem weiteren Aufprall, ohne dass komplizierte Mechanismen zuvor aufwendig reversiert werden müssen.

In **Fig.** 4 ist eine Stoßfängerverkleidung 31 dargestellt, in das ein elastisches Bauteil 36 eingesetzt ist, das aus einer Matrix auf Basis von Polynorbonen besteht, die mit speziellen Ölen als Füllstoff angereichert ist. Wie auch die ausgekleidete Frontklappe 21 aus **Fig.** 3 soll auch die Stoßfängerverkleidung 31 durch die energieabsorbierenden Eigenschaften des elastischen Bauteils 36 das Verletzungsrisiko eines aufprallenden Fußgängers oder Radfahrers verringern. Die besonders hohe Energieaufnahmefähigkeit des Materials des elastischen Bauteils 36 spielt dabei eine große Rolle, da so trotz des Fußgängerschutzes noch eine kompakte und optisch ansprechende Bauweise der Stoßfängerverkleidung 31 möglich ist.

## Patentansprüche

1. Kraftfahrzeug mit zumindest einem Bauteil, **dadurch gekennzeichnet, dass** das Bauteil **(6, 16, 26, 36)** elastische und energieabsorbierende Eigenschaften hat und aus einer dreidimensionalen Matrix auf Basis von Polynorbonen, aus Nitril-PVC-Schaum oder aus geschäumten Polyolefinen besteht.

2. Kraftfahrzeug nach Anspruch 1, **dadurch gekennzeichnet, dass** die dreidimensionale Matrix mit Füllstoffen gefüllt ist.

3. Kraftfahrzeug nach Anspruch 2, **dadurch gekennzeichnet, dass** als Füllstoffe Öle und / oder Silikate zum Einsatz kommen.

4. Kraftfahrzeug nach einem der vorhergehenden Ansprüche, **dadurch gekennzeichnet, dass** das Bauteil **(6)** zumindest Bestandteil einer Dichtung **(4)** einer Fahrzeugklappe **(1)** ist.

5. Kraftfahrzeug nach Anspruch 4, **dadurch gekennzeichnet, dass** das Bauteil **(6)** in einer Dichtung **(4)** mit zumindest einer Hohlkammer zumindest eine Hohlkammer zumindest teilweise ausfüllt.

6. Kraftfahrzeug nach einem der Ansprüche 1 bis 3, **dadurch gekennzeichnet, dass** das Bauteil **(16)** zumindest Bestandteil eines Anschlagpuffers für eine Fahrzeugtür oder -klappe **(11)** ist.

7. Kraftfahrzeug nach einem der Ansprüche 1 bis 3, **dadurch gekennzeichnet, dass** das Bauteil **(26)** zumindest Bestandteil einer inneren Auskleidung einer Klappe **(21)** in Schalenbauweise ist.

8. Kraftfahrzeug nach einem der Ansprüche 1 bis 3, **dadurch gekennzeichnet, dass** das Bauteil **(36)** zumindest Bestandteil eines Stoßfängers **(31)** ist.
